Europäisches Patentamt

European Patent Office

Office européen des brevets

(11) Publication number: **0 485 833 A2**

# EUROPEAN PATENT APPLICATION

(21) Application number: **91118721.9**

(22) Date of filing: **04.11.91**

(51) Int. Cl.5: **G06F 15/72**

(30) Priority: **15.11.90 US 613438**

(43) Date of publication of application:
**20.05.92 Bulletin 92/21**

(84) Designated Contracting States:
**DE FR GB**

(71) Applicant: **MOTOROLA INC.**
**1303 East Algonquin Road**
**Schaumburg Illinois 60196(US)**

(72) Inventor: **Diefendorff, Keith Everett**
**3405 Hancock Drive**
**Austin, Texas 78731(US)**
Inventor: **Sooch, Janet H.**
**11525 Silmarillion Trail**
**Austin, Texas 78739(US)**

(74) Representative: **Lupton, Frederick et al**
**Motorola European Intellectual Property**
**Operations Seal House Seal Road**
**Basingstoke, Hants RG21 1NO(GB)**

(54) **A method for executing graphics color saturating arithmetic instructions in a data processor.**

(57) A method for executing a graphics add saturating arithmetic instruction in a data processing system (20), having a graphics execution unit, is provided. An instruction sequencer (22) transfers graphics instructions to the graphics execution unit (30). When the sequencer (22) issues a graphics add saturating arithmetic instruction, a selected number of data operands are transferred from a general register file (34) to the graphics execution unit (30), via a communications bus(38). One of the selected data operands comprise one or more fixed point values. The graphics execution unit (30) adds each of the one or more fixed point values to generate an intermediate result. When the graphics execution unit (30) detects that the addition caused an overflow/underflow condition to occur, a saturation value is substituted for the intermediate which caused the overflow/underflow condition, thereby forming a result operand. The result operand is transferred to the general register file (34).

FIG.2

## FIELD OF THE INVENTION

This invention relates generally to the rendering of three-dimensional graphic images, and more particularly to a method for the rendering of three-dimensional graphic images using a data processor.

## CROSS REFERENCE TO A RELATED APPLICATION

This application is related to an application entitled "A Method for Executing Graphics Pixel Packing Instructions in a Data Processor", (SC01073A), European Patent Application No.     .

## BACKGROUND OF THE INVENTION

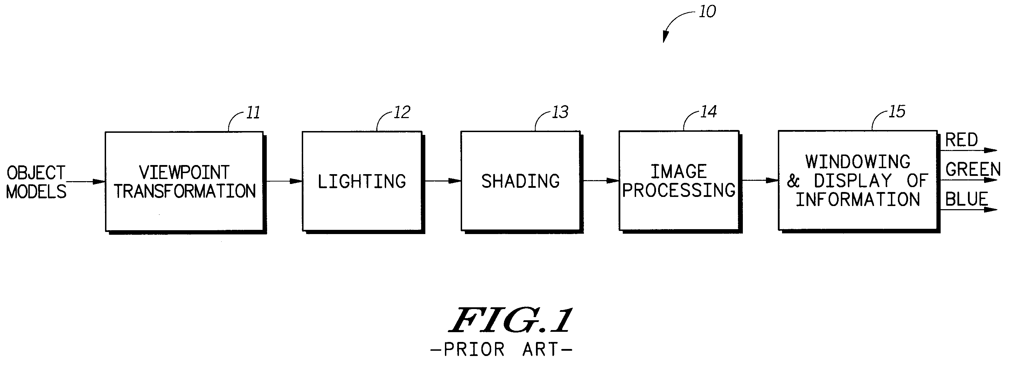

Today's high performance interactive display systems (e.g. personal computers and workstations) require specialized graphics assist hardware, or complex three-dimensional (3-D) rendering programs, to generate the realistic, animated 3-D images. Essentially, the graphics task is to convert an image, stored as an abstract representation of primitive shapes, and render that image as a realistic scene on a computer display. The graphics problem is to do it with dispatch. Shown in FIG. 1 is a block diagram 10 illustrating a known process for rendering realistic, animated three-dimensional (3-D) images. The process consists of five major steps, and is computationally intensive. Depending upon the system, some of the process steps may be performed in software, with the remainder being performed using graphics assist hardware. An image is typically represented as a group of mathematically described objects specified by shape, coordinates, surface properties, and color values. In the first step, the viewpoint transformation process 11, the objects must undergo a series of mathematical transformations (matrix multiplications) to orient the objects in space relative to the viewer, scale them to the right size, adjust for perspective foreshortening, and clip to the desired display volume. Coordinates are almost exclusively maintained and manipulated as floating point numbers.

In the second step, the lighting process 12, lighting models define the lighting to be applied to the image. In this step, ambient, diffuse, and specular lighting models can be applied to the image. Surface detail polygons may be added to simulate texture. Color and lighting information is resolved to a RGB triple at each polygon vertex which specifies the component intensities of the three additive primary colors, red, green, and blue. Normally these component intensities are "fixed point values".

During the shading process 13, the third step, the image must be clipped, projected into two-dimensions, and mapped from image coordinate space to display coordinates. Accordingly, the image is flattened, or decomposed, into simple triangles or scan aligned trapezoids. Shading algorithms are applied to make polygon facets appear solid, to smooth polygonally approximated surfaces, and to convert polygons to an array of pixels suitable for display on a raster scan display device. Color values are interpolated from vertex normals by averaging surface normals of adjacent polygon facets. Then, either linear intensity (Gouraud) or normal-vector (Phong) interpolation is performed to shade each polygon. Color slope for each scan line crossing the polygon is computed and used to calculate the color of each pixel on the scan line internal to the polygon. The "color" of each pixel is stored as a triple - one channel for each of the three additive primary colors, red, green, and blue. As pixels are computed, depth information is applied to remove hidden surfaces using various algorithms such as Z-buffering. Anti-aliasing corrections may also be applied to remove discrete-pixel spatial sampling errors which cause object edges to appear jagged.

Three types of shading are commonly used: constant shading, Gouraud shading, and Phong shading. The computational complexity of the constant shading algorithm is less than that of Gouraud and Phong. The image quality of constant shading is inferior to that of Gouraud and Phong, since the constant shading algorithm generates flat looking images with visible facets. The Gouraud shading algorithm provides a marked improvement in the image quality. The Gouraud algorithm is a "scan-line" algorithm which uses linear interpolation to compute the color of the first and last pixel on each scan line crossing the polygon. The linear interpolation requires a high level of computation complexity, thus, making Gouraud shading a prime candidate for use in hardware graphics accelerators. The Phong shading algorithm provides an even higher image quality, but the algorithm is even more computationally difficult, and requires substantial amounts of special hardware to make execution of the algorithm fast enough for continuous use in high resolution interactive displays. Consequently, Phong shading is primarily used in applications requiring high quality output, such as film generation, which allow a trade-off between time and image quality.

Image processing 14 occurs during the fourth step to facilitate both convenient and efficient manipulation of individual objects in a scene independently. In order to accomplish independent manipulation of individual objects, a mechanism is provided for placing one object on top of another. The algorithm must handle the images correctly in the case of transparency, and must blend object edges smoothly (anti-aliasing). For example, if a foreground object is rotated, it is more efficient to simply re-render that object than the entire scene. This is accomplished using compositing algorithms, capable of smoothly blending multiple images. Such algorithms are also capable of accurately rendering the effect of object transparency. Typically, image compositing algorithms utilize a fourth channel, called alpha (a), which is appended to the three (RGB) color channels of each pixel. The value of alpha specifies the percentage of a pixel covered by an object. Using, alpha, the net contribution of a foreground and background object can be computed by interpolation to give a composite color value.

The image is displayed in the final step, image display 15. As the color of each pixel is computed, it is stored in memory as an array of pixels or displayed on the screen by writing it into the frame buffer. The image must be transferred to and from the display system's frame buffer within the context of the governing windowing system. Fast Bit Block Transfers (bitblt), area fills, line drawing algorithms are required to rapidly move images between memory and the frame buffer. Once pixels are placed into the frame buffer, specialized display system hardware constantly scans the frame buffer in sync with the cathode ray tube's (CRT's) raster scan using the pixel data stored in the frame buffer to modulate the intensity of the CRT's red, green, and blue electron guns, and thereby forming the image on the screen. Thus, an important graphics task is to convert an image stored as an object description into a raster image in a pixel array in memory (or a frame buffer). Essentially, the electron beam(s) intensity is modulated by the data read from the frame buffer in sync with the raster scan, to create a visible image on the screen.

Typically, graphics display systems use three different frame buffer styles: 32-bit true color, 16-bit dithered true color, and 8-bit pseudocolor. The 32-bit true color format is used for high quality displays in the hi-end personal computer and workstation applications. Typically 8-bits are used for each of the three (RGB) color channels and stored packed in a single 32-bit word. The 16-bit dithered true color is used for medium cost color displays, wherein 4-5 bits are used for each of the three (RGB) color channels and two pixels are stored for each 32-bit word. The 8-bit pseudocolor frame buffer system is used for low-end color and high-end grayscale displays. Generally, in the pseudocolor frame buffer, 8-bits per pixel are used, and four pixels are stored in a 32-bit word.

Microprocessors having high performance floating point capabilities may be used to rapidly perform viewpoint transformation and lighting calculations on complex images. In addition, microprocessors with flexible data manipulation instructions and high data throughput can efficiently run the algorithms (i.e. bitblt) necessary to achieve good display system performance. The shading, raster conversion, and image processing phases of the problem, however, are computation intensive and require hardware support beyond that found in most conventional microprocessors to achieve good interactive performance. Generally, 3-D graphics rendering programs on general purpose microprocessors use "constant" shading algorithms to avoid the more computationally intensive algorithms; however, these microprocessors generate inferior images to Gouraud and Phong shading. Typically, special purpose image rendering hardware is very expensive, and is difficult to integrate into a system. Thus, it is desirable to provide graphics instructions, for use in a conventional microprocessor, targeted at improving performance on the shading, raster conversion and image processing phases of the rendering process.

Graphics shading and image processing algorithms often compute color intensity values using fixed point arithmetic; however, a problem can arise on addition if the sum of two intensity values is too large to fit in the result field. Upon such an occurrence, the result "wraps-around", due to modulo arithmetic, thereby generating a smaller value. This smaller value may produce a visible defect in the image. Efforts to ameliorate this problem focus on methods for producing a pixel which is as close in color to the desired color as possible, within the limitations of the dynamic range of the individual color channels. Generally, accomplishing this goal requires that the method for producing the pixel employs some form of "saturation" arithmetic to handle the problems associated with the occurrence of arithmetic overflow during the computation of the channel intensities.

Known microprocessors currently available lack the performance required to handle the overflow/underflow conditions in software when producing images at high speeds, such as during animation. Due to architectural limitations, these microprocessors must utilize less computationally intensive shading and image processing algorithms to maintain the required speed of image production. Since the algorithm used for its production could not properly handle the overflow/underflow conditions occuring during the shading or image processing, the quality of the image displayed may suffer. Thus, it is desirable to provide graphics instructions, for use in a conventional microprocessor, to accelerate the performance of the microprocessor during the shading, and image processing phases.

SUMMARY OF THE INVENTION

The invention provides a data processing system, comprising: storage means for storing a plurality of data elements and a plurality of instructions, said plurality of data elements comprising data operands for use with said plurality of instructions;

an arithmetic logic execution unit for executing a selected type of instructions;

a graphics execution unit for executing a selected type of graphic instructions received from said sequencer means; communications means coupled to each of said execution units, for providing said instructions of said selected type to each of said execution units, said communications means transferring said plurality of data elements between said storage means and said execution units; and

sequencer means for providing a sequence of instruction addresses to said storage means, for receiving a sequence of instructions for execution by said execution units in response thereto, and for delivering said sequence of instructions to said communications means, said sequencer means also retrieving a required number of data elements from said storage means for each instruction in said sequence of instructions;

a method for executing a pixel add or subtract saturating arithmetic instruction comprising the steps of:

transferring a selected number of data operands to said graphics execution unit each of said selected data operands comprising one or more fixed point values;

adding or subtracting each of the one or more fixed point values in a first operand to each of the one or more fixed point values in a second operand, based upon a predefined relationship between said first operand and said second, to generate one or more intermediate values;

detecting if each of said one or more intermediate values can not be numerically represented within a predetermined range of values, based upon a predefined interpretation by said graphics unit of each of said fixed point values in said first and second operands, and said intermediate values, as signed or unsigned numbers;

either (A) determining a default value to substitute for said intermediate values which are detected to be outside of said predetermined range of values; and merging said default value, for each of said intermediate values which are detected to be outside said predetermined range of values, with intermediate values, which were not detected to be outside said predetermined range of values, to produce a result operand comprising one or more fixed point values;

or (B) merging a default value, substituted for each of said intermediate values which were detected to be outside of said predetermined range of values, with said intermediate values, which were not detected to be outside said predetermined range of values, to produce a result operand comprising one or more fixed point values; and storing said result operand in said storage means.

A method for executing a graphics pixel add with saturating arithmetic instruction in a data processing system is provided. The data processing system includes a main memory for storing data and instructions, and dedicated execution units for executing instructions of a selected type. The dedicated execution units include an arithmetic logic execution unit, a floating point execution unit for executing floating point instruction, and a graphics execution unit for executing graphics instructions. The executions units are connected to an instruction sequencer, which provides instructions and data operands to the execution units, via a communications bus. In response to receiving a pixel add with saturating arithmetic instruction, a selected number of operands are transferred from a register file to the graphics execution unit, via a communication bus. The selected data operands comprise one or more fixed point values which represent the four color channel intensity values (aRGB) of one or more pixels. The graphics execution unit adds each of the one or more fixed point values in a first operand to each of the one or more fixed point values in a second operand, based upon a predefined relationship between the first and second operands, to generate one or more intermediate results. The graphics execution unit then detects whether an overflow or underflow condition exists for one or more of the intermediate results. When an overflow or underflow condition exists, the graphics execution unit determines a default saturation value to substitute for the intermediate results for which the overflow or underflow exists. The graphics unit then inserts the default saturation value, for each of intermediate results, for which an overflow/underflow condition exists to produce a final result operand comprising one or more fixed point values. The final result operated is stored in a main memory or frame buffer.

BRIEF DESCRIPTION OF THE DRAWINGS

FIG. 1 is a block diagram illustrating a known process for rendering three-dimensional images in a data processing system.

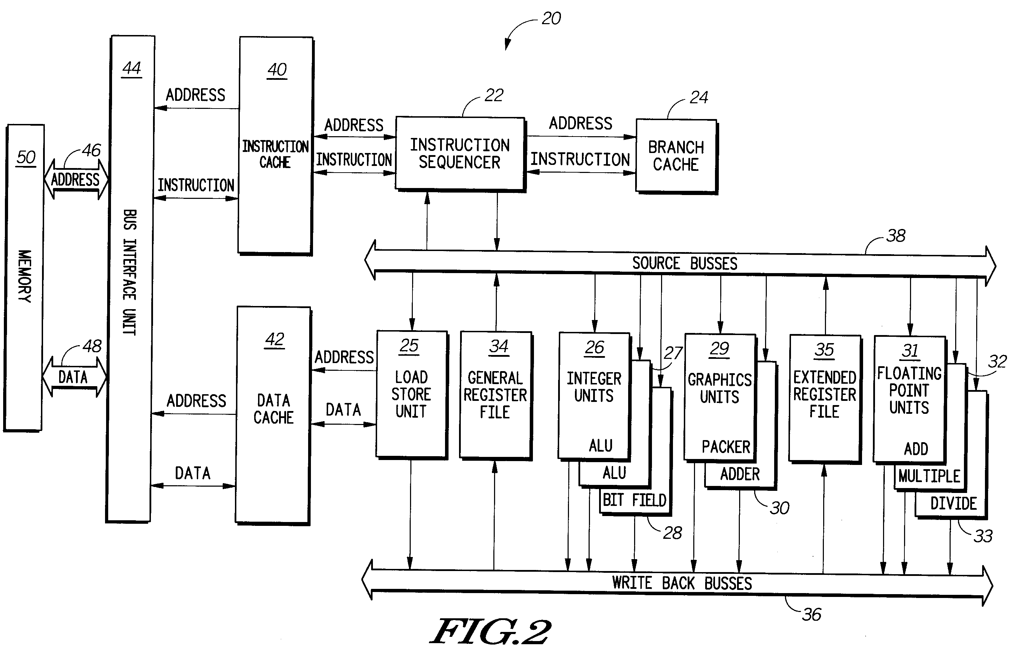

FIG. 2 is a block diagram illustrating a data processing system for implementing the present invention.

FIG. 3 is a diagram illustrating a pixel add with saturation operation for a graphics instruction, in accordance with the present invention.

FIG. 4 is a table comparing the results generated by a pixel add instruction using modulo arithmetic versus the results generated using a pixel add with saturating arithmetic instruction, in accordance with the present invention.

FIG. 5 is a flow diagram for performing a pixel add with saturating arithmetic instruction according to a preferred embodiment of the invention.

## DETAILED DESCRIPTION OF A PREFERRED EMBODIMENT

Shown in FIG. 1 is a block diagram illustrated an integrated circuit data processing system 20 for implementing the present invention. In a preferred embodiment, data processing system 20 comprises an instruction sequencer 22, a branch cache 24, load/store units 25, integer execution units 26-28, graphics execution units 29-30, floating point units 31-33, and register files 34 and 35. The instruction sequencer 22 provides control over the data flow amount execution units 25-33, and the register files 34-35. Accordingly, the instruction sequencer 22 implements a 4-stage (fetch-decode-execute-writeback) master instruction pipeline, enforces data interlocks, dispatches (issues) instructions to available execution units 25-33, directs data from the register files 34-35 onto and off of the busses 36 and 38, and maintains a state history so it can back the system 20 up in the event of an exception.

In the preferred embodiment, the integer execution units 26-28 comprises two identical arithmetic logic units (ALU's) 26, and 27, and one bit-field unit (BFU) 28. Each subunit has a one clock execution phase and can process instructions at a throughput rate of one instruction per clock. The graphics units comprise a packer unit 29 and an adder unit 30, and each unit executes graphics instructions in a single clock. The floating point adder (ADD) 31 and multiplier (MULTIPLY) 32 units execute floating point instructions in three clocks (independent of the operand precision) but are fully pipelined to allow new instructions to issue every clock. The floating point divide unit (DIV) 33 is a non-pipelined iterative design. The DIV unit 33 is shared between floating point and integer divide operations. The results produced by the floating point units 31-33 are exact IEEE results with no software fix-up required. The floating point units 31-33 run concurrently with all other execution units 26-29 and any mix of integer, memory, graphics, and floating point operations can be issued together in the same clock.

In accordance with the preferred embodiment, a large 32-word general purpose register file (GRF) 33 provides operands for integer, logical, bit-field, memory addressing, graphics, and floating point operations. In addition, an extended 32-entry register file (XRF) 34 provides additional storage for floating point operands. The XRF 34 can hold 32 values of any precision (single, double, or extended). There are two writeback busses 36 available to the execution units 25-33. For the purpose of simplification, the term "write-back" will be used when a particular execution unit transfers information onto one of the two buses comprising the writeback busses 36. Execution units 25-33 are each independent functional units with their own internally controlled pipelines. When an execution unit finishes execution of an instruction it places the result data onto a writeback bus 36. The register files 33-34 take the data off the writeback busses 36 and store it into the correct destination register. If another instruction is waiting for this data, it is "forwarded" past the register files 33-34 directly into the appropriate function unit(s). This allows a data dependent instruction to issue on the next clock without waiting for the data to be written into the register file and read out back again. Since different execution units have different pipeline lengths, it is possible for more than two instructions to be completing in a given clock cycle. Consequently, execution units 25-33 arbitrate for an available slot on a writeback bus 36. The highest writeback priority is granted to single cycle execution units, such as the integer units 26-27, and the graphics units 29-30, so that single cycle instructions are always guaranteed a writeback slot while multistage pipeline units, such as floating point units 31-33 and load/store units 25 arbitrate for writeback slots. Pipelined execution units which are denied a writeback slot, will continue to advance their internal pipeline stages and accept new instructions until all pipeline stages are full.

Internally, data processing system 20 uses a Harvard architecture with separate paths for the instruction stream and the data stream. Separate caches 40, and 42 are used to supply the two streams. On cache hits, the instruction cache 40 can deliver two instructions and the data cache 42 can accept or deliver a 64-bit operand each clock. Cache misses are serviced by filling the cache line with a burst bus transaction beginning with the address of the missed datum (or instruction). During the line fill, instructions or data are streamed directly from the bus to their respective units. Data cache coherency among multiple processors is maintained by bus snooping. Separate tags are maintained so that snoop activity does not interfere with normal processor accesses.

In accordance with the preferred embodiment, the sequencer 22 is responsible for instruction flow in system 20. Sequencer 22 retrieves instructions from an instruction cache 40 and branch accelerator cache 24, and dispatches the instructions to one of the execution units 25-33 based on availability and inter-instruction data dependencies. A maximum of two instructions are decoded and considered for issue to the execution units 25-33 on each clock. The pipeline stages are fully hardware interlocked so that data dependencies will automatically stall instruction issue without software assistance. When an instruction "issues", the source data for that instruction is transferred from a source register in the general register file 34 onto the source operand busses 38, and the associated destination register is marked "busy". A hardware scoreboard maintains a record of all busy registers. The execution unit 25-32, to which the instruction issues then reads data off the appropriate source bus 38. The register files 34-35 and source busses 38 have sufficient bandwidth to sustain execution throughput at the peak rate of two instructions per clock. When the instruction is complete, the destination register is written with the result data, and the busy bit for the register is cleared.

The data types used in graphics system are unique. Often, data is packed tightly to conserve storage and improve memory bandwidth utilization. Thus, using conventional instructions to operate on graphics data may causes a performance bottleneck. The graphics units 29-30 implement a set of instructions which are designed to operate on graphics data in a manner which accelerates the rendering of 3-D color graphics images. Each of the graphics units execute instructions in a single clock; however, they are not identical and each can accept only one instruction, of the type it executes, per clock. In the preferred embodiment, these graphics units 29-30 perform efficient manipulation of pixels by operating on multiple bit-fields, within 64-bit operands, in parallel. All graphics operands are located in the general register file 33, therefore, no special registers or temporary registers are needed. Thus, the graphics instructions provide the same generalized flexibility as the other instructions (i.e. floating point, integer) executed by data processing system 20. The graphics adder unit 30 is a dual 32-bit adder with controllable carry chains on each 8-bit boundary. Arithmetic is carried out using either modulo or saturation arithmetic. Overflow and underflow detection and maximum and minimum field values are dependent on whether the operands are two's complement signed numbers (hereafter referred to simply as "signed") or unsigned numbers. The graphics pixel packing unit 29 is a specialized bit-field unit for packing, unpacking, and shifting pixel or fixed-point data. It operates on multiple bit-fields within 64-bit operands in parallel.

The data processing system 20 reads graphics data in 64-bit quanta, and then allows individual fields within the 64-bit words to be processed in parallel - avoiding the need to pull them apart and operate on them individually. In the preferred embodiment of the present invention, the graphics units 29-30 execute graphics instructions using "pixel-at-a-time" processing. In pixel-at-a-time processing, all color channels for a given pixel are completely processed before proceeding to the next pixel. Thus, for example, the graphics units 29 would initially process the red and green color channel of a pixel in a selected graphics instruction, then process the blue and alpha channel of the same pixel before moving on to the next pixel on the scan line.

In the present invention, a saturating arithmetic instruction works generically on multiple fields in a wide (64-bit) operand. It is general in nature, and useful in a variety of graphics rendering algorithms including shading, and image processing. Arithmetic calculations are sometimes performed using signed, unsigned, or mixed signed fixed point graphics operands. Furthermore, it is desirable to have a mechanism to determine when to employ saturating arithmetic versus modulo arithmetic. In accordance with the present invention, the encoding of the opcode for a pixel add/subtract instructions provides the graphics adder unit 30 with the requisite information to specify when to employ saturating arithmetic. Moreover, the encoded information, in the pixel add/subtract instructions, dictates to the graphics adder unit 30 which of the selected graphics operands are signed, and which are unsigned. The availability of this information facilitates generation of the proper saturated maximum or minimum intensity values, upon the occurrence of an overflow or underflow condition, respectively.

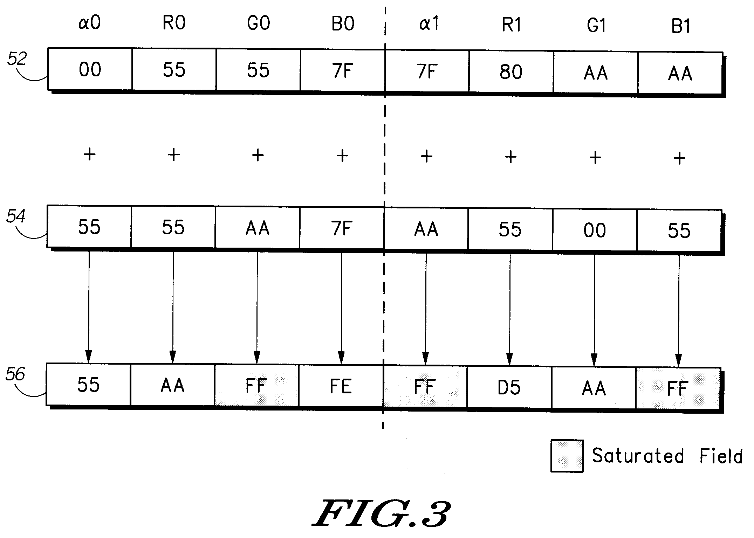

Shown in FIG. 3 is a diagram illustrating the operation of a pixel add instruction using saturating arithmetic on unsigned source operands, to generate an unsigned result operated, in accordance with the present invention. In the operation shown in FIG. 3, the graphics adder unit 30 is performing addition on two source operands, $S_1$ and $S_2$, which were retrieved from registers 52 and 54, respectively. Each operand comprises eight fields of 8-bit fixed point values, which represent the four color channel intensity values (aRGB) of each of two pixels. Whenever the result of the addition of two fields will not fit within the respective 8-bit field in the result operand, the graphics adder unit will substitute a predefined maximum saturation value in that 8-bit field. Similarly, whenever the result of a subtraction of two fields cannot be represented within the respective 8-bit field in the result operand, the graphics adder unit 30 will substitute a minimum saturation value in that 8-bit field.

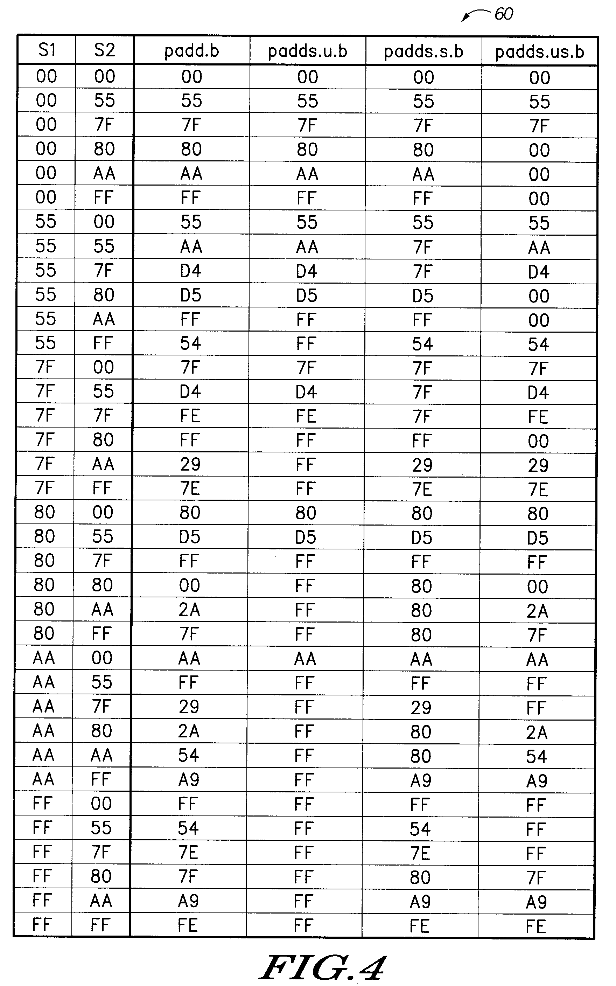

In the present invention, the method for detection of an overflow/underflow condition, and the saturation value substituted, is dependent upon which operands are signed or unsigned. The encoded information in the pixel add instruction directs the graphics adder units 30 as to which operands (source and results) are signed or unsigned. When performing a pixel add instruction using saturation arithmetic, any combination of signed or unsigned operands, generating signed or unsigned results is allowed. Shown in FIG. 4 is a table 60 which provides an example of the results (in hexidecimal notation, hereinafter denoted by "$" in text) generated by performing modulo arithmetic versus the results generated by performing saturating arithmetic,. In table 60, the results of adding source operands $S_1$ and $S_2$ are illustrated for modulo arithmetic (padd.b); saturating arithmetic will all operands unsigned (padds.u.b); saturating arithmetic with all operands signed (padds.s.b), and saturating arithmetic with $S_1$ unsigned, $S_2$ signed, and the result unsigned (padds.us.b). Notice that in the example provided in table 60, saturation occurs only at the maximum and minimum field values; however, the present invention allows the use of arbitrary saturation limits. For example, in an unsigned 8-bit field addition, overflow could be detected at some value smaller (i.e. $D5), than the maximum field value (i.e. $FF), and the graphics unit 30 would substitute this smaller value ($D5) as the upper saturation value.

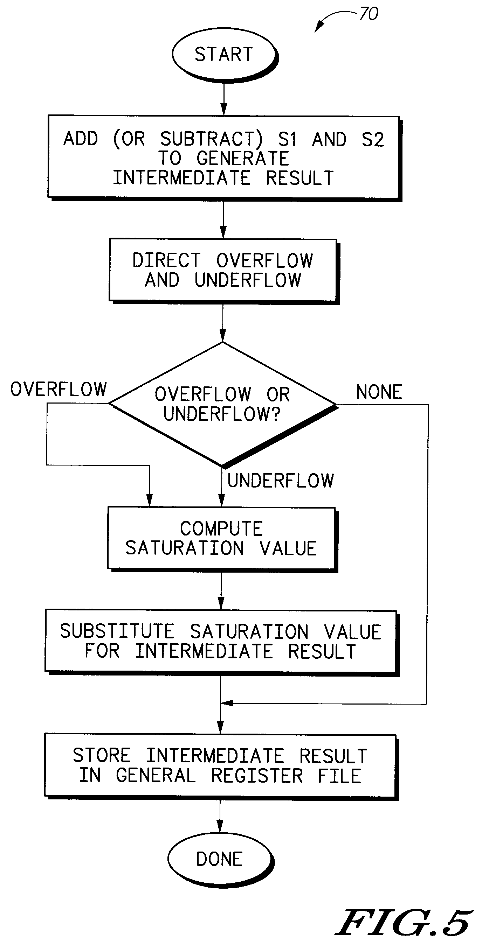

FIG. 5 illustrates a flow diagram 70 for performing a pixel add (or subtract) instruction using saturating arithmetic in accordance with the present invention. For illustrative purposes only, diagram 70 is described in accordance with the example provided in FIG. 3. Thus, the graphics adder unit 30 performs a pixel add operation using saturating arithmetic as described in diagram 70 (FIG. 5) on all eight fields, in parallel, within the source operands S1 and S2 to generate eight 8-bit intermediate results. The graphics adder unit 30 begins execution of the pixel add instruction with saturation arithmetic by adding S1 to S2 using binary addition to produce an intermediate result. Using the saturation limits and information provided (in the opcode encoding) identifying which operands are signed and which are unsigned, the graphics adder unit 30 detects whether an overflow or underflow condition exists. When an overflow or underflow condition exists, the graphics adder unit 30 computes a saturation value, once again using the saturation limits, and information provided in the opcode encoding identifying which operands are signed, and which are unsigned. The graphics adder unit 30 proceeds to substitute the appropriate saturation value for the previously computed intermediate result. When no overflow or underflow condition exists, the graphics adder unit 30 does not substitute the saturation value for the intermediate result. Finally, in either case the intermediate result is stored in the general register file 34, and the pixel add instruction with saturation is complete.

In accordance with the present invention, the pixel subtract with saturating arithmetic instruction operates in the manner shown in diagram 70, with the principle distinctions being the subtraction of the source operand S2 from source operand S1, the method for detection of overflow/underflow, and the computation of the appropriate saturation value by the graphic adder unit 30. The graphics adder unit 30 employs conventional logic to accomplish these tasks.

While the invention has been described in a preferred embodiment, it will be apparent to those skilled in the art that the disclosed invention may be modified in numerous ways and may assume many embodiments other than that specifically set out and described above. For example, the source operands for the graphics instructions may be stored in the main memory 50, and transferred to the source busses 38 via the sequencer 22. Alternatively, the source operands may be stored in the extended register file 34. Furthermore, in the present invention, the number of fields, and the field sizes may vary according to information encoded in the instruction opcode. Accordingly, it is intended by the appended claims to cover all modifications of the invention which fall within the true spirit and scope of the invention.

## Claims

1. In a data processing system (20), comprising:
   storage means (34, 35, 50) for storing a plurality of data elements and a plurality of instructions, said plurality of data elements comprising data operands for use with said plurality of instructions;
   an arithmetic logic execution unit (26, 27) for executing a selected type of instructions;
   a graphics execution unit (30) for executing a selected type of graphic instructions received from said sequencer means;
   communications means (36, 38)coupled to each of said execution units (26, 27, 30), for providing said instructions of said selected type to each of said execution units(26, 27, 30), said communications means (36, 38) transferring said plurality of data elements between said storage means (34, 35, 50) and said execution units (26, 27, 30); and

sequencer means (22) for providing a sequence of instruction addresses to said storage means (34, 35, 50), for receiving a sequence of instructions for execution by said execution units (26, 27, 30) in response thereto, and for delivering said sequence of instructions to said communications means (36, 38), said sequencer means (22) also retrieving a required number of data elements from said storage means (34, 35, 50) for each instruction in said sequence of instructions;

a method for executing a pixel add or subtract saturating arithmetic instruction comprising the steps of:

transferring a selected number of data operands to said graphics execution unit (30) each of said selected data operands comprising one or more fixed point values;

adding or subtracting each of the one or more fixed point values in a first operand to each of the one or more fixed point values in a second operand, based upon a predefined relationship between said first operand and said second, to generate one or more intermediate values;

detecting if each of said one or more intermediate values can not be numerically represented within a predetermined range of values, based upon a predefined interpretation by said graphics unit (30) of each of said fixed point values in said first and second operands, and said intermediate values, as signed or unsigned numbers;

either (A) determining a default value to substitute for said intermediate values which are detected to be outside of said predetermined range of values; and merging said default value, for each of said intermediate values which are detected to be outside said predetermined range of values, with intermediate values, which were not detected to be outside said predetermined range of values, to produce a result operand comprising one or more fixed point values;

or (B) merging a default value, substituted for each of said intermediate values which were detected to be outside of said predetermined range of values, with said intermediate values, which were not detected to be outside said predetermined range of values, to produce a result operand comprising one or more fixed point values; and storing said result operand in said storage means (34, 35, 50).

2. The method of claim 1 further comprising the step of using information encoded in an opcode corresponding to said saturating arithmetic instruction to determine which of said fixed point values in said first and said second operands are signed or unsigned, and which of said fixed point values in said intermediate values are signed or unsigned.

3. The method of claim 2 further comprising the step of using information encoded in said opcode corresponding to said saturating arithmetic instruction to define a field size and a number of fields, and said default values corresponding to a minimum and a maximum value in said field size.

4. The method of claim 3 further comprising the step of using information encoded in a third operand to define said predetermined range of values, and a first alternate default value corresponding to an upper saturation value, and a second alternate default value corresponding to a lower saturation value in said predetermined range of values.

*FIG.1*
-PRIOR ART-

FIG.2

20

24 BRANCH CACHE

22 INSTRUCTION SEQUENCER

ADDRESS / INSTRUCTION

38 SOURCE BUSSES

36 WRITE BACK BUSSES

25 LOAD STORE UNIT

34 GENERAL REGISTER FILE

26 INTEGER UNITS — ALU — ALU / BIT FIELD 27 / 28

29 GRAPHICS UNITS — PACKER — ADDER 30

35 EXTENDED REGISTER FILE

31 FLOATING POINT UNITS — ADD — MULTIPLE — DIVIDE 32 / 33

40 INSTRUCTION CACHE

42 DATA CACHE

44 BUS INTERFACE UNIT

46 ADDRESS

48 DATA

50 MEMORY

10

EP 0 485 833 A2

|  | α0 | R0 | G0 | B0 | α1 | R1 | G1 | B1 |
|---|---|---|---|---|---|---|---|---|
| 52 | 00 | 55 | 55 | 7F | 7F | 80 | AA | AA |
|  | + | + | + | + | + | + | + | + |
| 54 | 55 | 55 | AA | 7F | AA | 55 | 00 | 55 |
| 56 | 55 | AA | FF | FE | FF | D5 | AA | FF |

☐ Saturated Field

*FIG.3*

~60

| S1 | S2 | padd.b | padds.u.b | padds.s.b | padds.us.b |
|----|----|--------|-----------|-----------|------------|
| 00 | 00 | 00 | 00 | 00 | 00 |
| 00 | 55 | 55 | 55 | 55 | 55 |
| 00 | 7F | 7F | 7F | 7F | 7F |
| 00 | 80 | 80 | 80 | 80 | 00 |
| 00 | AA | AA | AA | AA | 00 |
| 00 | FF | FF | FF | FF | 00 |
| 55 | 00 | 55 | 55 | 55 | 55 |
| 55 | 55 | AA | AA | 7F | AA |
| 55 | 7F | D4 | D4 | 7F | D4 |
| 55 | 80 | D5 | D5 | D5 | 00 |
| 55 | AA | FF | FF | FF | 00 |
| 55 | FF | 54 | FF | 54 | 54 |
| 7F | 00 | 7F | 7F | 7F | 7F |
| 7F | 55 | D4 | D4 | 7F | D4 |
| 7F | 7F | FE | FE | 7F | FE |
| 7F | 80 | FF | FF | FF | 00 |
| 7F | AA | 29 | FF | 29 | 29 |
| 7F | FF | 7E | FF | 7E | 7E |
| 80 | 00 | 80 | 80 | 80 | 80 |
| 80 | 55 | D5 | D5 | D5 | D5 |
| 80 | 7F | FF | FF | FF | FF |
| 80 | 80 | 00 | FF | 80 | 00 |
| 80 | AA | 2A | FF | 80 | 2A |
| 80 | FF | 7F | FF | 80 | 7F |
| AA | 00 | AA | AA | AA | AA |
| AA | 55 | FF | FF | FF | FF |
| AA | 7F | 29 | FF | 29 | FF |
| AA | 80 | 2A | FF | 80 | 2A |
| AA | AA | 54 | FF | 80 | 54 |
| AA | FF | A9 | FF | A9 | A9 |
| FF | 00 | FF | FF | FF | FF |
| FF | 55 | 54 | FF | 54 | FF |
| FF | 7F | 7E | FF | 7E | FF |
| FF | 80 | 7F | FF | 80 | 7F |
| FF | AA | A9 | FF | A9 | A9 |
| FF | FF | FE | FF | FE | FE |

## FIG.4

~70

```
        ┌─────────┐
        │  START  │
        └─────────┘
             │
             ▼
┌──────────────────────────────┐
│  ADD (OR SUBTRACT) S1 AND S2  │
│         TO GENERATE           │
│      INTERMEDIATE RESULT      │
└──────────────────────────────┘
             │
             ▼
     ┌──────────────────┐
     │ DIRECT OVERFLOW  │
     │  AND UNDERFLOW   │
     └──────────────────┘
             │
             ▼
          ╱─────────╲
OVERFLOW ╱ OVERFLOW OR ╲ NONE
 ◄──────╲  UNDERFLOW?  ╱──────►
          ╲─────────╱
             │
         UNDERFLOW
             │
             ▼
     ┌──────────────────┐
     │     COMPUTE      │
     │ SATURATION VALUE │
     └──────────────────┘
             │
             ▼
┌──────────────────────────────┐
│  SUBSTITUTE SATURATION VALUE  │
│      FOR INTERMEDIATE RESULT  │
└──────────────────────────────┘
             │
             ▼
┌──────────────────────────────┐
│   STORE INTERMEDIATE RESULT   │
│    IN GENERAL REGISTER FILE   │
└──────────────────────────────┘
             │
             ▼
        ┌─────────┐
        │  DONE   │
        └─────────┘
```

*FIG.5*